# EUROPÄISCHE PATENTSCHRIFT

(11) **EP 2 986 864 B1**
(45) Veröffentlichungstag und Bekanntmachung des Hinweises auf die Patenterteilung: **01.05.2019**
(21) Anmeldenummer: 14724397.6
(22) Anmeldetag: 09.05.2014
(51) Int. Cl.: F16D 1/02, F16D 1/06

(54) **KUPPLUNGSNABE**
CLUTCH HUB
MOYEU D'EMBRAYAGE

(30) Priorität: 29.05.2013 DE 102013210076
(43) Veröffentlichungstag der Anmeldung: 24.02.2016
(73) Patentinhaber: Flender GmbH, 46395 Bocholt (DE); VEM Sachsenwerk GmbH, 01257 Dresden (DE)
(72) Erfinder: JANSEN, Andre, 46325 Borken (DE); PROSKE, Jens, 01219 Dresden (DE)
(74) Vertreter: Maier, Daniel Oliver
(86) Internationale Anmeldenummer: PCT/EP2014/059542
(87) Internationale Veröffentlichungsnummer: WO 2014/191182

(56) Entgegenhaltungen:
- DE-B4-102007 036 001
- GB-A- 2 197 431
- US-A1- 2011 311 304
- US-A1- 2011 311 305

## Beschreibung

Die vorliegende Erfindung betrifft eine Kupplungsnabe und eine Kupplungsvorrichtung.

DE 102007036001 B4 (VOITH PATENT GMBH) 19.02.2009 beschreibt ein elektrisch isolierendes Wellenanschlusselement zur Herstellung einer elektrischen Isolation zwischen der Antriebsanlage eines Schienenfahrzeugs und einem Schienenstrang. Das Wellenanschlusselement umfasst ein äußeres Wellenelement mit einer Innenöffnung, in der eine Innenfläche ausgebildet ist, sowie ein inneres Wellenelement mit einer Außenfläche, die in die Innenöffnung des äußeren Wellenelements mittels eines Pressverbands eingesetzt ist. Die Innenfläche des äußeren Wellenelements und/oder die Außenfläche des inneren Wellenelements weisen eine elektrische Isolationsbeschichtung auf, die das äußere und das innere Wellenelement elektrisch gegeneinander isoliert. Dabei weist das innere Wellenelement eine Innenöffnung zum Anschluss an weitere Wellenkomponenten auf.

Aufgabe der vorliegenden Erfindung ist es, eine verbesserte Kupplung bereitzustellen.

Diese Aufgabe wird erfindungsgemäß durch eine Kupplungsnabe mit den in Anspruch 1 angegebenen Merkmalen gelöst. Die Kupplungsnabe umfasst einen Nabenkörper. Der Nabenkörper weist eine axiale Durchgangsöffnung zum Aufnehmen einer Welle auf. An den beiden axialen Enden der Durchgangsöffnung befindet sich jeweils eine Stirnseite. In der Durchgangsöffnung ist eine Innenfläche ausgebildet. Außerdem ist an den Stirnseiten jeweils eine die Durchgangsöffnung ringförmig umgebende Planfläche ausgebildet. Dabei ist die Innenfläche von einer als Keramikbeschichtung ausgebildeten elektrischen Isolationsbeschichtung bedeckt. Weiterhin bedeckt die elektrische Isolationsbeschichtung durchgehend jeweils einen die Durchgangsöffnung umgebenden Ringbereich auf den Planflächen und einen zwischen der Innenfläche und dem jeweiligen Ringbereich gebildeten Übergangsbereich.

Der Erfindung liegt die Erkenntnis zugrunde, dass bei den bisher bekannten elektrisch isolierenden Wellenanschlusselementen ein elektrischer Überschlag zwischen den voneinander elektrisch isolierten Bauteilen im Randbereich der Isolierbeschichtung nicht verhindert wird, da der Abstand der Bauteile, die sich auf unterschiedlichem elektrischen Potential befinden, im Wesentlichen durch die Schichtdicke der Isolierbeschichtung vorgegeben - die typische Schichtdicke ist kleiner als 2 mm - und daher relativ gering ist. Erfindungsgemäß wird der Abstand der Bauteile, die sich auf unterschiedlichem elektrischen Potential befinden, dadurch vergrößert, dass die elektrische Isolationsbeschichtung außer der Innenfläche der Durchgangsöffnung der Kupplungsnabe noch jeweils einen die Durchgangsöffnung umgebenden Ringbereich auf den Planflächen und einen zwischen der Innenfläche und dem jeweiligen Ringbereich gebildeten Übergangsbereich durchgehend bedeckt.

Die erfindungsgemäße Kupplungsnabe ist in allen Kupplungen zwischen Motoren und Getrieben, insbesondere bei allen umrichtergespeisten elektrischen Antrieben, u.a. bei Traktionsantrieben, einsetzbar, insbesondere bei Einlagermotoren. Dies bietet vor allem Vorteile bei der Lieferung von kompletten Antriebseinheiten, d.h. Motor und Getriebe umfassenden Antriebseinheiten. Eine bevorzugte Anwendung der Kupplungsnabe ist in einer elektrisch isolierenden Kupplung zwischen der Antriebsanlage eines Schienenfahrzeugs und einem Schienenstrang.

Versuche haben überraschenderweise gezeigt, dass die Isolierbeschichtung nicht durch ein zusätzliches Nabenbauteil gegen an der Schnittstelle von Welle und Kupplungsnabe auftretende Drehmoment-Lasten geschützt werden muss, welches zwischen der Isolierbeschichtung und der Welle angeordnet ist. Im Gegensatz zu bisher bekannten Kupplungsnaben liegt die Isolierbeschichtung unmittelbar an der Welle an. Somit entfällt ein zusätzliches Nabenbauteil zum Schutz der Isolierbeschichtung, welches gemäß einem Vorurteil in der Fachwelt bisher als unverzichtbar galt, um Schäden der Isolierbeschichtung wie Sprödbruch zu verhindern.

Vorteilhafte Ausgestaltungen und Weiterbildungen der Erfindung sind in den abhängigen Ansprüchen angegeben. Dabei kann das erfindungsgemäße Verfahren auch entsprechend den abhängigen Vorrichtungsansprüchen weitergebildet sein, und umgekehrt.

Die Keramikbeschichtung kann eine oder mehrere folgender Keramiken aufweisen: Aluminiumoxid, Magnesiumoxid, Zirkonoxid, Titanoxid, Aluminiumtitanat, Siliziumcarbid, Borcarbid, Siliziumnitrid, Aluminiumnitrid oder Bornitrid. Der Nabenkörper kann aus einem metallischen Werkstoff, z.B. aus Eisen oder Stahl, bestehen. Alternativ können auch Verbundmaterialien vorgesehen sein.

Eine Keramikbeschichtung kann als Schlicker aufgebracht werden, wie es aus der Emaille-Herstellung bekannt ist. Es ist auch möglich, dass die keramische Isolationsschicht durch ein thermisches Spritzverfahren wie Flamm- oder Plasmaspritzen auf die zu beschichtenden Flächen der Kupplungsnabe aufgebracht wird.

Gemäß einer bevorzugten Ausgestaltung der Erfindung weist die Isolationsbeschichtung eine gleichmäßige Schichtdicke auf. Insbesondere ist die Schichtdicke durch Schleifen weitgehend gleichmäßig ausgebildet. Die Schichtdicke der Isolationsbeschichtung liegt vorzugsweise in einem Bereich von 0,1 bis 1 mm, insbesondere im Bereich von 0,2 mm. Diese Dicke bietet einen vorteilhaften Kompromiss zwischen Durchschlagfestigkeit, Materialverbrauch und Standhalten der auftretenden Belastungen, insbesondere Drehmomentbeaufschlagung, beim Betrieb der Kupplungsnabe. Die tatsächlich verwendete Beschichtungsdicke hängt von den Anforderungen an den elektrischen Widerstand und die Impedanz ab und wird in Abhängigkeit von den zu erwartenden Spannungen und kapazitiven Entladeströmen gewählt.

Gemäß einer bevorzugten Ausgestaltung der Erfindung weist der zwischen der Innenfläche und dem jeweiligen Ringbereich gebildete Übergang einen Krümmungsradius im Bereich von 0,2 bis 5 mm, insbesondere im Bereich von 1 bis 3 mm, weiter insbesondere von ca. 2 mm auf. Versuche haben gezeigt, dass in dem gewölbten Übergangsbereich eine besonders stabile Beschichtung ausgebildet werden kann, falls der Krümmungsradius in diesem Bereich liegt.

Gemäß einer bevorzugten Ausgestaltung der Erfindung weist die Kupplungsnabe einen Ölkanal auf, welcher an einer der Stirnseiten beginnt und in der Innenfläche mündet. Vorzugsweise ist der Ölkanal durch Bohrungen in dem Nabenkörper ausgebildet. In seinem stirnseitigen Eintrittsabschnitt kann der Ölkanal ein Innengewinde aufweisen, in welches eine Gewindehülse einer hydraulischen Öldruckleitung eindrehbar ist. Durch den Ölkanal kann Öl unter Druck zwischen die Innenfläche und eine entsprechende Kontaktfläche einer Welle gepresst werden; auf diese Weise kann eine Montage einer Welle in die Durchgangsöffnung der Kupplungsnabe oder eine Demontage der Welle erleichtert werden, z.B. zu Wartungszwecken. Außerdem kann an der Mündung des Ölkanals in der Innenfläche eine radial umlaufende Rinne ausgebildet sein. Von Vorteil ist dabei, dass durch die Rinne eingepresstes Öl über den gesamten Umfang der entsprechenden Kontaktflächen von Innenfläche und Welle verteilt werden kann.

Gemäß einer bevorzugten Weiterbildung der Erfindung ist die Durchgangsöffnung als eine N-fache Stufenbohrung ausgeführt, wobei N eine ganze Zahl größer Eins ist. Von Vorteil ist dabei, dass eine Stufenbohrung ein Aufstecken der Kupplungsnabe auf eine entsprechend gestufte Welle erleichtert, da die Abschnitte der Kupplungsnabe mit den größten Innendurchmessern zunächst über die Wellenabschnitten mit den kleinsten Außendurchmessern geschoben werden. Somit findet eine automatische und sukzessive genauere Zentrierung statt.

Gemäß einer bevorzugten Ausgestaltung der Erfindung ist die Durchgangsöffnung kegelförmig oder zylindrisch ausgeführt. Ein Pressverband mit kegelförmigen Bauteilen, d.h. ein Kegelpressverband, bietet den Vorteil einer vereinfachten Demontage. Ein Pressverband mit zylinderförmigen Bauteilen bietet den Vorteil, dass keine axialen Kräfte auf den Pressverband eingeleitet werden.

Eine bevorzugte Ausgestaltung der Erfindung ist eine Kupplungsvorrichtung mit zwei drehstarr miteinander verbundenen Kupplungshälften, wobei die Kupplungsvorrichtung eine Metallmembran aufweist und mindestens eine der beiden Kupplungshälften eine Kupplungsnabe wie oben beschrieben ist.

Eine erfindungsgemäße Kupplungsvorrichtung erlaubt eine elektrische Isolation zwischen dem Läufer einer elektrischen Maschine und der schnell laufenden Welle eines direkt gekuppelten Untersetzungsgetriebes mittels der isolierten Kupplungsnabe, deren Aufgabe es ist, elektrische Stromdurchgänge vom Motorläufer durch das Getriebe zu verhindern, insbesondere zur Vermeidung von Lagerschäden.

Die elektrisch isolierte Kupplungsnabe erlaubt darüber hinaus eine einfache Prüfung der Einlagermotoren auf eine intakte Läuferisolation, d.h. von Lagern und Kupplungsnabe, bei Verwendung von beschichteten Lagern ("Coated Bearings") oder anderer Lagerisolation und unisoliertem Hilfslager während einer automatisierten Stückprüfung der Maschinen. Damit einhergehend ist es in einfachster Weise möglich, den Isolationswiderstand des Motorläufers im Rahmen einer Wartung von Fahrzeugen im eingebauten Zustand zu überprüfen.

Die erfindungsgemäße Kupplungsvorrichtung ist aufgrund ihrer Kompaktheit und Robustheit insbesondere für einlagrige Traktionsmotoren geeignet, ist aber nicht auf diese Verwendung beschränkt. Die erfindungsgemäße Kupplungsvorrichtung erfüllt somit den Kundenwunsch nach Antriebseinheiten, umfassend Motor und Getriebe, welche für den Betrieb an schnell schaltenden Spannungs-Umrichtern (U-Umrichter) geeignet sind. Die erfindungsgemäße Kupplungsvorrichtung schützt das Getriebe vor schädlichen kapazitiven Ableitströmen infolge von umrichterbedingten Lagerspannungen, insbesondere bei kompakten Traktionsantrieben.

Dabei ist es bevorzugt, wenn die Kupplungshälften mittels einer Stirnverzahnung verbunden sind. Dies ergibt eine besonders drehsteife Kupplung.

Es ist möglich, eine erfindungsgemäße Kupplungsnabe mit einer Welle im Pressverband zu verbinden, wobei die erwärmte Kupplungsnabe auf die nicht erwärmte Welle aufgesteckt wird. Versuche haben gezeigt, dass entgegen bestehender Vorurteile in Fachkreisen eine Erwärmung der beschichteten Kupplungsnabe zu keinen Beschädigungen, insbesondere Spannungsrissen, in der Beschichtung, insbesondere einer Keramikbeschichtung, führt. Die beschichtete Kupplungsnabe wird dazu beispielsweise auf eine Temperatur von ca. 200°C erwärmt, z.B. mithilfe eines Induktionsgeräts, während sich die Welle auf Umgebungstemperatur befindet, z.B. auf 20°C.

In einer alternativen Ausgestaltung weist die Kupplungsvorrichtung zwei miteinander verbundene Kupplungshälften auf, welche auf je einem Wellenende angeordnet sind. Dabei trägt mindestens eines der beiden Wellenenden eine Beschichtung, welche das Wellenende und die entsprechenden Kupplungshälfte elektrisch isoliert. Die Beschichtung ist hierbei außer auf der Kontaktfläche von Wellenende und Kupplungshälfte auch in den an die Kontaktfläche anschließenden Ringbereichen auf dem Wellenende angeordnet. Somit wird ein Überschlag zwischen der Welle und einer darauf montierten Kupplungsnabe durch eine stirnseitige Verlängerung der Überschlagsstrecke verhindert, indem die elektrische Isolationsbeschichtung außer die Kontaktfläche der Kupplungsnabe und der Welle auch noch die beiden die Kontaktfläche umgebenden Ringbereiche auf dem Wellenumfang bzw. der Wellenstirnfläche durchgehend bedeckt.

Im Folgenden wird die Erfindung anhand der beiliegenden Zeichnungen erläutert. Es zeigt jeweils schematisch und nicht maßstabsgetreu
- FIG 1: ein erstes Ausführungsbeispiel einer Kupplungsnabe;
- FIG 2: einen Randbereich einer Isolierbeschichtung bei bisher bekannten Kupplungsnaben;
- FIG 3: einen Randbereich einer Isolierbeschichtung bei ei-ner erfindungsgemäßen Kupplungsnabe;
- FIG 4: ein weiteres Ausführungsbeispiel einer Kupplungsnabe;
- FIG 5: eine Kupplungsvorrichtung mit zwei Kupplungshälften;
- FIG 6: eine Kupplungsvorrichtung gemäß Figur 5, die eine drehstarre Verbindung zwischen zwei Wellen herstellt; und
- FIG 7: eine alternative Ausgestaltung der in Figur 6 dargestellten Kupplungsvorrichtung.

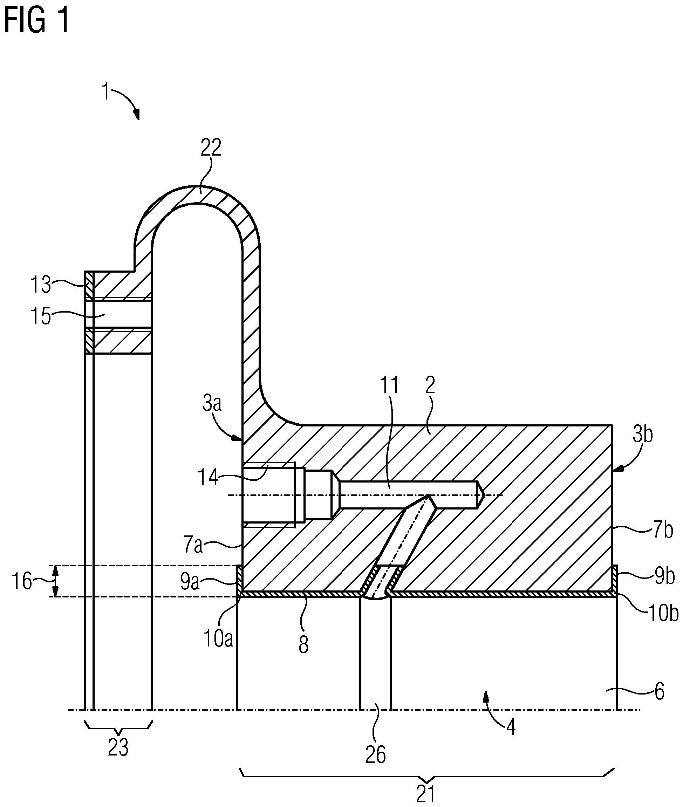

Figur 1 zeigt eine Kupplungsnabe 1 mit einem Nabenkörper 2. Der einstückig ausgeformte Nabenkörper weist einen Wellenabschnitt 21 zur Aufnahme einer Welle, eine axial nachgiebige Metallmembran 22 und einen Verschraubungsabschnitt 23 mit Bohrungen 16 und einer Stirnverzahnung 13 zur Verbindung mit einem weiteren Kupplungselement auf. Der Nabenkörper 2 weist in dem Wellenabschnitt 21 eine zylinderförmige Durchgangsöffnung 4 auf, die sich in axialer Richtung durch den Nabenkörper 2 erstreckt. Die Durchgangsöffnung 4 dient der Aufnahme einer Welle. Der Nabenkörper 2 weist außerdem an den beiden axialen Enden der Durchgangsöffnung 4 jeweils eine Stirnseite 3a, 3b auf. In der Durchgangsöffnung 4 ist eine Innenfläche 6 ausgebildet.

Im Nabenkörper 2 ist ein Ölkanal 11 ausgebildet, welcher an der linken Stirnseite 3a beginnt und in der Innenfläche 5 mündet. Der Ölkanal 11 ist durch zwei winklig zueinander verlaufende Bohrungen in dem Nabenkörper 2 ausgebildet. In seinem stirnseitigen 3a Eintrittsabschnitt weist der Ölkanal 11 ein Innengewinde 14 auf, in welches eine Gewindehülse einer hydraulischen Öldruckleitung eindrehbar ist. Durch den Ölkanal 11 kann Öl unter Druck zwischen die Innenfläche 6 und eine entsprechende Umfangsfläche einer Welle gepresst werden; auf diese Weise kann eine Montage einer Welle in die Durchgangsöffnung 4 der Kupplungsnabe 1 oder eine Demontage der Welle erleichtert werden, z.B. zu Wartungszwecken. An der Mündung des Ölkanals 11 in der Innenfläche 6 weist die Durchgangsöffnung eine radial umlaufende Rinne 26 auf. Durch den Ölkanal 11 eingepresstes Öl kann sich über die Rinne 26 über den gesamten Umfang der Innenfläche 6 verteilen und so die Montage und Demontage einer Welle erleichtern (Ölpressverband) .

Um einen Stromüberschlag im Bereich der Einmündung des Ölkanals 11 in die Innenfläche 4 zu vermeiden, wird außer der Innenfläche 4 auch die sich an die Innenfläche 4 anschließende Wandung des Ölkanals 11 mit der elektrischen Isolationsbeschichtung beschichtet. Es ist von Vorteil, den Ölkanal möglichst weit in das Nabeninnere hineinreichend zu beschichten, da dies die Überschlagstrecke und somit die Überschlagsfestigkeit vergrößert. Beim Aufbringen der Beschichtung muss darauf geachtet werden, dass die Beschichtung im Ölkanal 11 diesen nicht verschließt.

Ein Alternative zu einer elektrisch isolierenden Beschichtung der Wandung des Ölkanals 11 ist es, den Ölkanal in die Welle, z.B. die Motorwelle, zu verlegen oder die Isolierschicht auf der Welle, z.B. der Motorwelle, anzuordnen.

An den beiden Stirnseiten 3a, 3b ist jeweils eine die Durchgangsöffnung 4 ringförmig umgebende Planfläche 7a, 7b ausgebildet. Die Innenfläche 6, jeweils ein die Durchgangsöffnung 4 umgebender Ring 9a, 9b auf den Planflächen 7a, 7b und jeweils ein zwischen der Innenfläche 6 und dem jeweiligen Ring 9a, 9b gebildeter Übergangsbereich 10a, 10b sind durchgehend von einer elektrisch isolierenden Beschichtung 8 bedeckt.

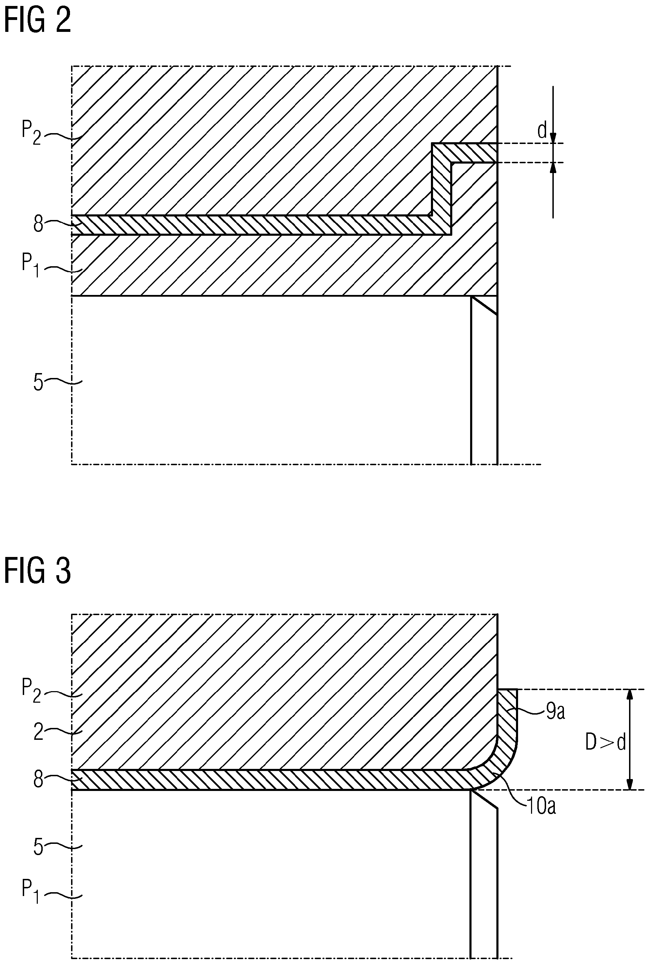

Die Schichtdicke der elektrischen Isolationsbeschichtung 8 liegt in einem Bereich von 0,2 mm. Die Ringbreite 16 der Ringe 9a, 9b auf den Planflächen 7a, 7b an beiden Stirnseiten des Nabenkörpers 2 liegt in einem Bereich von mindestens 1 mm, vorzugsweise in einem Bereich von 2 bis 3 mm. Die Ringbreite 16 wird in Abhängigkeit von einer maximal zu erwartenden Überschlagsspannung gewählt. Je größer die Ringbreite 16 gewählt wird, desto geringer ist ein elektrischer Überschlag zwischen dem Nabenkörper 2 und einer Welle aufgrund der Kriechwegverlängerung. Figur 2 und Figur 3 veranschaulichen diesen Sachverhalt.

Figur 2 zeigt einen Randbereich einer Isolierbeschichtung 8 bei bisher bekannten Kupplungsnaben. Die Isolierbeschichtung, die zwischen zwei Nabenbauteilen auf unterschiedlichen elektrischen Potentialen P1 und P2 angeordnet ist, weist eine Schichtdicke d auf, die der Überschlagsstrecke entspricht. Im vorliegenden Beispiel weist die Kupplungsnabe zwei Elemente auf, wobei das Element auf dem Potential P1 ein unmittelbar die Welle 5 umschließendes inneres Nabenelement und das das Element auf dem Potential P2 ein äußeres Nabenelement ist. Die Isolierbeschichtung 8 ist zum Schutz gegen Beschädigungen zwischen beiden Nabenelementen eingeschlossen. Ein elektrischer Überschlag zwischen beiden Nabenelementen an der Stirnseite der Kupplungsnabe wird nicht zuverlässig verhindert, da der Abstand der Bauteile, die sich auf unterschiedlichem elektrischen Potential P1 und P2 befinden, durch die Schichtdicke d der Isolierbeschichtung vorgegeben und daher relativ gering ist.

Figur 3 illustriert die erfindungsgemäße Lösung dieses Problems: der Abstand D der Bauteile, die sich auf unterschiedlichem elektrischen Potential P1 und P2 befinden, d.h. die Überschlagsstrecke zwischen der Kupplungsnabe 2 und einer Welle 5 an der Stirnseite der Kupplungsnabe, wird dadurch vergrößert (D > d), dass die elektrische Isolationsbeschichtung 8 außerdem jeweils einen die Durchgangsöffnung umgebenden Ringbereich 9a auf den Planflächen und einen zwischen der Innenfläche und dem jeweiligen Ringbereich gebildeten Übergangsbereich 10a durchgehend bedeckt.

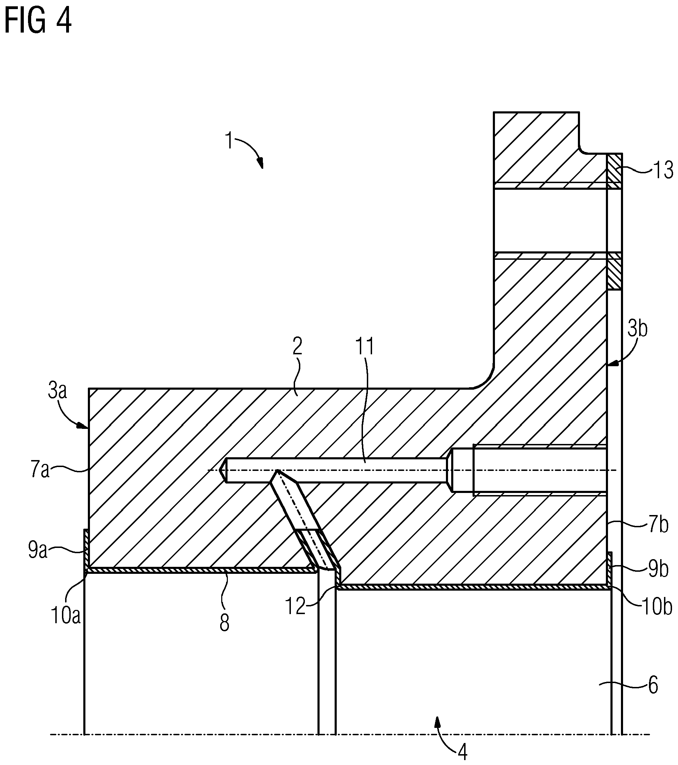

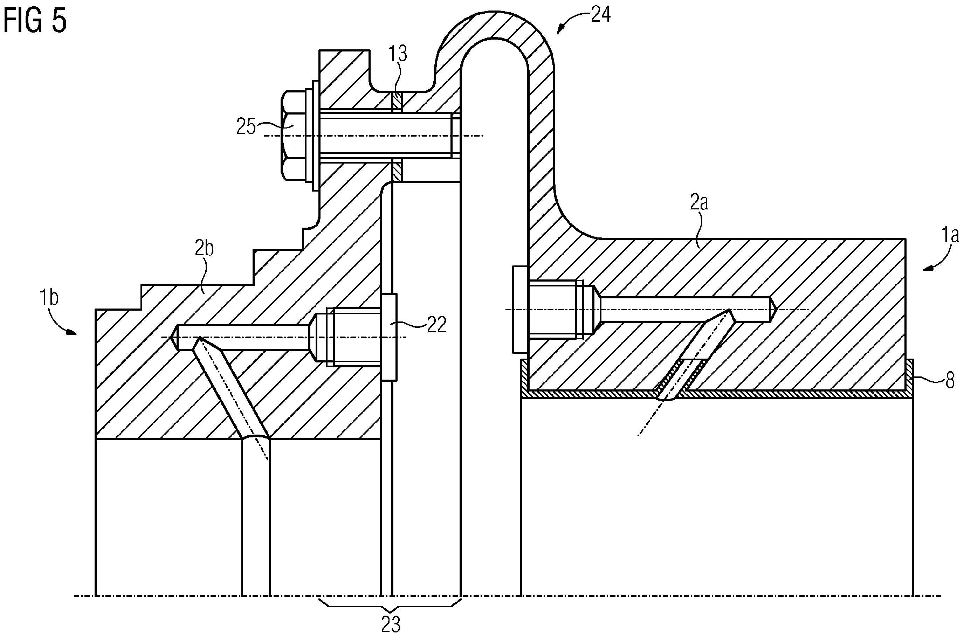

Figur 4 zeigt eine zweite Kupplungsnabe 1, die an die erste Kupplungsnabe nach Figur 1 montierbar ist; die dadurch entstehende Kupplung ist eine drehstarre Membrankupplung, wie sie in Figur 5 gezeigt ist. Die Isolierbeschichtung 8 kann auf der ersten Kupplungsnabe 1 nach Figur 1 und/oder auf der zweiten Kupplungsnabe 1 nach Figur 4 aufgebracht sein. Die in Figur 4 dargestellte zweite Kupplungsnabe 1 unterscheidet sich von der in Figur 1 dargestellten ersten Kupplungsnabe dadurch, dass sie keine Metallmembran auf weist und dass ihre Durchgangsöffnung 4 als eine Stufenbohrung mit einer Stufe 12 ausgebildet ist.

Figur 5 zeigt eine zweiteilige, drehstarre Kupplungsvorrichtung 24, die aus der Kombination eines Nabenkörpers 2a nach Figur 1 mit einem Nabenkörper 2b nach Figur 4 gebildet wurde, wobei die Isolierbeschichtung 8 auf der Innenfläche des rechten Nabenkörpers 2a aufgebracht ist.

Eine derartige Membrankupplung 24, vorzugsweise als Ganzstahlkupplung ausgeführt, hat hohe Rundlaufgenauigkeiten und einer extrem hohe Wuchtgüte, da sie gemeinsam mit dem Motorrotor gewuchtet werden können. Rundlaufgenauigkeit und Wuchtgüte bleiben dauerhaft erhalten durch die optimale Zentrierung der Stirnverzahnung 13 der beiden Kupplungshälften 1a und 1b. Solche Kupplungen sind zudem praktisch wartungsfrei.

Aufgrund ihrer Membrankontur 22 sind solche Membrankupplungen 24 in der Lage, axial nachzugeben. Ein einfaches Trennen bzw. Verbinden von Motor und Getriebe über die Verschraubung der beiden Kupplungshälften 1a, 1b in einem Verschraubungsabschnitt 23 mittels Schrauben 25 ist ohne Lösen der Pressverbände möglich. Derartige Membrankupplungen 24 sind wartungsfrei und dienen zur Übertragung der Drehmomente und zur Lagerung der Motorwelle im Getriebe. Die bevorzugt als Ganzstahlkupplungen ausgeführten Membrankupplungen 24 lassen nur geringen Wellenversatz zu. Die Membrankupplungen werden bevorzugt in Straßenbahnen und Niederflurstraßenbahnen eingesetzt.

Der gute Rundlauf der Kupplung erlaubt auch ein nachträgliches Aufbringen der Isolationsbeschichtung 8.

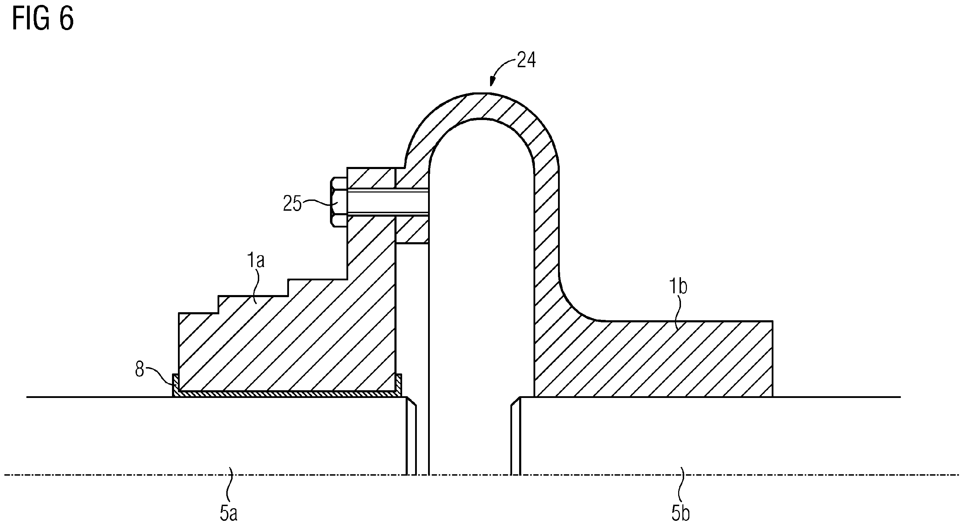

Figur 6 zeigt eine Kupplungsvorrichtung 24 gemäß Figur 5, die zwei Wellen 5a und 5b verbindet. Die erste Welle 5a ist eine Motorwelle, die zweite Welle 5b eine Getriebewelle. Die Kupplungsvorrichtung umfasst zwei mittels Schrauben 25 miteinander verschraubte Kupplungshälften 1a und 1b, die im Pressverband auf den Wellen 5a und 5b befestigt sind. Erfindungsgemäß weist zumindest eine der Kupplungshälften 1a und 1b eine elektrische Isolationsbeschichtung zwischen dem Nabenkörper und der Welle auf. Im vorliegenden Ausführungsbeispiel ist die Isolationsbeschichtung 8 an der linken Kupplungshälfte 1a, d.h. an der Schnittstelle der Kupplung 24 zur Motorwelle 5a, angeordnet.

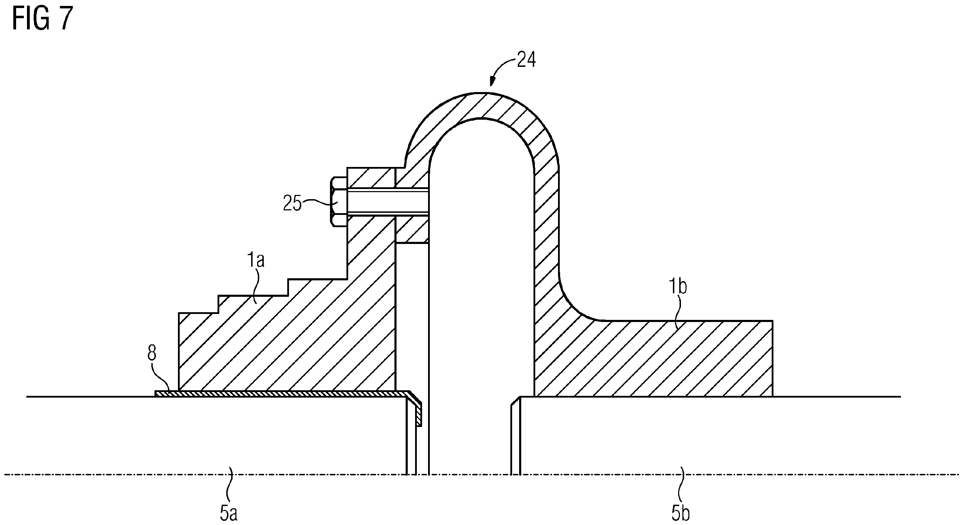

Figur 7 zeigt eine alternative Ausgestaltung der Kupplungsvorrichtung 24, wie sie in Figur 6 dargestellt ist. Die Kupplungsvorrichtung 24 weist dabei wie in Figur 6 zwei miteinander verbundenen Kupplungshälften 1a, 1b auf, welche auf je einem Wellenende 5a, 5b angeordnet sind. Dabei trägt eines der beiden Wellenenden 5a eine Beschichtung 8, welche das Wellenende 5a und den Nabenkörper der entsprechenden Kupplungshälfte 1a elektrisch isoliert. Die Beschichtung 8 ist hierbei außer im Bereich der Kontaktfläche von Wellenende 5a und Nabenkörper der Kupplungshälfte 1a, d.h. dem Auflagebereich des Nabenkörpers auf der Welle 5a, auch in den an die Kontaktfläche anschließenden Ringbereichen auf dem Wellenende 5a angeordnet.

Der in Figur 7 linke Ringbereich der Beschichtung ist in Form eines Zylindermantels ausgebildet. Der in Figur 7 rechte Ringbereich der Beschichtung ist in Form eines Vierteltorus ausgebildet, wobei sich die Beschichtung von dem Umfang der Welle über die stirnseitige Fase bis an die Stirnseite des Wellenendes erstreckt.

Die die Überschlagsstrecke vergrößernden Ringbereiche sind bei der Ausgestaltung gemäß Figur 7 also auf der Welle 5a angeordnet, im Gegensatz zu der Ausgestaltung gemäß Figur 6, bei der die die Überschlagsstrecke vergrößernden Ringbereiche auf der Kupplungsnabe angeordnet sind.

Obwohl die Erfindung im Detail durch die bevorzugten Ausführungsbeispiele näher illustriert und beschrieben wurde, so ist die Erfindung nicht durch die offenbarten Beispiele eingeschränkt.

## Patentansprüche

1. Kupplungsvorrichtung (24) mit zwei Kupplungshälften (1a, 1b), welche miteinander verbunden sind, wobei mindestens eine der beiden Kupplungshälften (1a, 1b) eine Kupplungsnabe (1) ist, umfassend einen Nabenkörper (2) mit einer axialen Durchgangsöffnung (4) zum Aufnehmen einer Welle (5) und mit jeweils einer Stirnseite (3a, 3b) an den beiden axialen Enden der Durchgangsöffnung (4), wobei
- in der Durchgangsöffnung (4) eine Innenfläche (6) und an den Stirnseiten (3a, 3b) jeweils eine die Durchgangsöffnung (4) ringförmig umgebende Planfläche (7a, 7b) ausgebildet ist und
- die Innenfläche (6) von einer als Keramikbeschichtung ausgebildeten elektrischen Isolationsbeschichtung (8) bedeckt ist,
**dadurch gekennzeichnet, dass** die elektrische Isolationsbeschichtung (8) außerdem jeweils einen die Durchgangsöffnung (4) umgebenden Ringbereich (9a, 9b) auf den Planflächen (7a, 7b) und einen zwischen der Innenfläche (6) und dem jeweiligen Ringbereich (9a, 9b) gebildeten Übergangsbereich (10a, 10b) durchgehend bedeckt, wobei die Kupplungsvorrichtung (24) eine Metallmembran (22) aufweist.

2. Kupplungsvorrichtung (24) nach Anspruch 1, wobei der zwischen der Innenfläche (6) und dem jeweiligen Ringbereich (9a, 9b) gebildete Übergang (10a, 10b) einen Krümmungsradius im Bereich von 0,2 bis 5 mm, insbesondere im Bereich von 1 bis 3 mm, weiter insbesondere von ca. 2 mm, aufweist.

3. Kupplungsvorrichtung (24) nach einem der vorhergehenden Ansprüche, wobei die Kupplungsnabe (1) einen Ölkanal (11) aufweist, welcher an einer der Stirnseiten (3a, 3b) beginnt und in der Innenfläche (4) mündet.

4. Kupplungsvorrichtung (24) nach einem der vorhergehenden Ansprüche, wobei die Durchgangsöffnung (4) als eine N-fache Stufenbohrung ausgeführt ist, wobei N = 2, 3, 4, etc.

5. Kupplungsvorrichtung (24) nach einem der vorhergehenden Ansprüche, wobei die Durchgangsöffnung (4) kegelförmig oder zylindrisch ausgeführt ist.

6. Kupplungsvorrichtung (24) nach einem der vorhergehenden Ansprüche, wobei die Isolationsbeschichtung (8) eine gleichmäßige Schichtdicke (D) aufweist, insbesondere im Bereich von 0,2 mm.

7. Kupplungsvorrichtung (24) nach Anspruch 1, wobei die Kupplungshälften (1a, 1b) drehstarr miteinander verbunden sind.

8. Kupplungsvorrichtung (24) nach Anspruch 7, wobei die Kupplungshälften (1a, 1b) mittels einer Stirnverzahnung (13) verbunden sind.

9. Kupplungsvorrichtung (24) mit zwei miteinander verbundenen Kupplungshälften (1a, 1b), welche auf je einem Wellenende (5a, 5b) angeordnet sind, wobei mindestens eines der beiden Wellenenden (5a, 5b) eine Keramikbeschichtung (8) trägt, welche das Wellenende (5a, 5b) und die entsprechenden Kupplungshälfte (1a, 1b) elektrisch isoliert, wobei die Keramikbeschichtung (8) außer auf der Kontaktfläche von Wellenende (5a, 5b) und Kupplungshälfte (1a, 1b) auch in den an die Kontaktfläche anschließenden Ringbereichen auf dem Wellenende (5a, 5b) angeordnet ist.

## Claims

1. Clutch device (24) with two clutch halves (1a, 1b) which are connected to one another, wherein at least one of the two clutch halves (1a, 1b) is a clutch hub (1), comprising a hub body (2) with an axial passage opening (4) for receiving a shaft (5) and with in each case one face side (3a, 3b) at the two axial ends of the passage opening (4), wherein
- an inner surface (6) is embodied in the passage opening (4) and in each case a flat surface (7a, 7b), surrounding the passage opening (4) in an annular shape, is embodied on the face sides (3a, 3b) and
- the inner surface (6) is covered by an electrically insulating coating (8) embodied as a ceramic coating,
**characterised in that** the electrically insulating coating (8) in each case also continuously covers an annular region (9a, 9b) on the flat surfaces (7a, 7b) surrounding the passage opening (4) and a transition region (10a, 10b) formed between the inner surface (6) and the respective annular region (9a, 9b), wherein the clutch device (24) has a metal membrane (22).

2. Clutch device (24) according to claim 1, wherein the transition (10a, 10b) formed between the inner surface (6) and the respective annular region (9a, 9b) has a radius of curvature in the range of 0.2 to 5 mm, especially in the range of 1 to 3 mm, further especially of around 2 mm.

3. Clutch device (24) according to one of the preceding claims, wherein the clutch hub (1) has an oil channel (11), which begins on one of the face sides (3a, 3b) and emerges in the inner surface (4).

4. Clutch device (24) according to one of the preceding claims, wherein the passage opening (4) is embodied as an N-times stepped hole, wherein N = 2, 3, 4 etc..

5. Clutch device (24) according to one of the preceding claims, wherein the passage opening (4) is designed in a conical or cylindrical shape.

6. Clutch device (24) according to one of the preceding claims, wherein the insulation coating (8) has an even coating thickness (D), especially in the range of 0.2 mm.

7. Clutch device (24) according to claim 1, wherein the clutch halves (1a, 1b) are connected rotationally rigidly to one another.

8. Clutch device (24) according to claim 7, wherein the clutch halves (1a, 1b) are connected by means of face splines (13).

9. Clutch device (24) with two clutch halves (1a, 1b) connected to one another, which are each disposed at a shaft end (5a, 5b), wherein at least one of the two shaft ends (5a, 5b) bears a ceramic coating (8), which electrically insulates the shaft end (5a, 5b) and the corresponding clutch half (1a, 1b), wherein the ceramic coating (8), as well as being disposed on the contact surface of shaft end (5a, 5b) and clutch half (1a, 1b), is also disposed in the annular regions on the shaft end (5a, 5b) adjacent to the contact surface.

## Revendications

1. Dispositif (24) d'embrayage, ayant deux moitiés (1a, 1b) d'embrayage, qui sont assemblées l'une à l'autre, au moins l'une des deux moitiés (1a, 1b) d'embrayage étant un moyeu (1) d'embrayage, comprenant un corps (2) de moyeu, ayant une ouverture (4) axiale traversante de réception d'un arbre (5) et ayant, respectivement, une face (3a, 3b) frontale aux deux extrémités axiales de l'ouverture (4) traversante, dans lequel
- dans l'ouverture (4) traversante, est constituée une surface (6) intérieure et, sur les faces (3a, 3b) frontales, respectivement, une surface (7a, 7b) plane, entourant annulairement l'ouverture (4) traversante et
- la surface (6) intérieure est recouverte d'un revêtement (8) isolant du point de vue électrique, constitué sous la forme d'un revêtement en céramique,
**caractérisé en ce que** le revêtement (8) isolant du point de vue électrique recouvre, en outre, de manière continue, respectivement, une partie (9a, 9b) annulaire entourant l'ouverture (4) traversante sur les surfaces (7a, 7b) planes et sur une partie (10a, 10b) de transition, formée entre la surface (6) intérieure et la partie (9a, 9b) annulaire respective, le dispositif (24) d'embrayage ayant une membrane (22) métallique.

2. Dispositif (24) d'embrayage suivant la revendication 1, dans lequel la transition (10a, 10b), formée entre la surface (6) intérieure et la partie (9a, 9b) annulaire respective, a un rayon de courbure dans la plage de 0,2 à 5 mm, notamment dans la plage de 1 à 3 mm, notamment encore d'environ 2 mm.

3. Dispositif (24) d'embrayage suivant l'une des revendications précédentes, dans lequel le moyeu (1) de l'embrayage a un canal (11) pour de l'huile, qui commence sur l'une des faces (3a, 3b) frontales et débouche dans la surface (4) intérieure.

4. Dispositif (24) d'embrayage suivant l'une des revendications précédentes, dans lequel l'ouverture (4) traversante est réalisée en alésage à N paliers, N étant égal à 2, 3, 4, etc.

5. Dispositif (24) d'embrayage suivant l'une des revendications précédentes, dans lequel l'ouverture (4) traversante est conique ou cylindrique.

6. Dispositif (24) d'embrayage suivant l'une des revendications précédentes, dans lequel le revêtement (8) isolant a une épaisseur (D) de couche uniforme, notamment de l'ordre de 0,2 mm.

7. Dispositif (24) d'embrayage suivant la revendication 1, dans lequel les moitiés (1a, 1b) de l'embrayage sont solidaires en rotation.

8. Dispositif (24) d'embrayage suivant la revendication 7, dans lequel les moitiés (1a, 1b) de l'embrayage sont assemblées au moyen d'une denture (13) cylindrique.

9. Dispositif (24) d'embrayage, ayant deux moitiés (1a, 1b) d'embrayage assemblées entre elles, qui sont disposées sur, respectivement, un bout (5a, 5b) d'arbre, au moins l'un des deux bouts (5a, 5b) d'arbre portant un revêtement (8) en céramique, qui isole électriquement le bout (5a, 5b) d'arbre, et la moitié (1a, 1b) correspondante de l'engrenage, le revêtement (8) en céramique étant disposé sur le bout (5a, 5b) d'arbre, outre sur la surface de contact du bout (5a, 5b) d'arbre et la moitié (1a, 1b) de l'engrenage, également dans les parties annulaires se raccordant à la surface de contact.
